# EUROPÄISCHE PATENTSCHRIFT

(11) **EP 2 760 654 B1**
(45) Veröffentlichungstag und Bekanntmachung des Hinweises auf die Patenterteilung: **16.09.2020**
(21) Anmeldenummer: 12766669.1
(22) Anmeldetag: 01.10.2012
(51) Int. Cl.: B29C 44/18, B29C 44/58, E06B 3/267, E06B 3/22

(54) **VERFAHREN ZUM AUSSCHÄUMEN VON HOHLKAMMERPROFILEN ZUR HERSTELLUNG VON FENSTERN UND/ODER TÜREN**
METHOD FOR POUR-AND-SET FOAMING HOLLOW CHAMBER PROFILES
PROCÉDÉ DE MOUSSAGE DE PROFILÉS DE CHAMBRE CREUX

(30) Priorität: 30.09.2011 EP 11183432
(43) Veröffentlichungstag der Anmeldung: 06.08.2014
(73) Patentinhaber: Profine GmbH, 53840 Troisdorf (DE)
(72) Erfinder: DECHANTSREITER, Peter, 66953 Pirmasens (DE); GLÜCK, Alexander, 66540 Neunkirchen (DE); HAAS, Michael, 66954 Pirmasens (DE); SCHREIBER, Dominik, 66996 Fischbach (DE)
(74) Vertreter: profine Patent
(86) Internationale Anmeldenummer: PCT/EP2012/069391
(87) Internationale Veröffentlichungsnummer: WO 2013/045712

(56) Entgegenhaltungen:
- EP-A2- 2 072 743
- DE-A1- 2 117 166
- DE-A1- 3 512 588
- DE-A1- 19 812 470
- DE-A1-102008 042 995
- DE-A1-102009 023 669
- US-A- 3 137 744
- US-A- 5 129 975
- US-A- 5 174 640

## Beschreibung

Die Erfindung betrifft ein Verfahren zum Einbringen eines Isolierschaumstoffs in wenigstens eine von Wandungen begrenzte Hohlkammer eines als Hohlkammerprofil ausgebildeten Flügel- oder Blendrahmenprofils zur Herstellung von Fenstern und/oder Türen.

### Technisches Gebiet

Hohlkammerprofile zur Herstellung von Fenstern und/oder Türen, insbesondere aus thermoplastischem Kunststoff, weisen bei entsprechender Bautiefe bereits eine relativ gute Wärmedämmung auf. Im Zuge gestiegener Anforderungen an die Wärmedämmung reicht auch die übliche Unterteilung der Hohlkammern durch zusätzliche Zwischenwände nicht mehr aus. Es ist daher schon vorgeschlagen worden, Hohlkammern von Kunststoff-Profilen mit wärmedämmenden Schaumstoffen auszufüllen, um den konvektiven Wärmeübergang weiter zu verringern.

### Stand der Technik

Im Stand der Technik kann man dabei folgende Fallgruppen unterteilen: Das Ausschäumen fertiger Flügel- bzw. Blendrahmen, also das Ausschäumen einer umlaufenden Hohlkammer nach dem Verschweißen der Profile zu einem Rahmen (DE 20 2009 011 138 U1, DE 10 2007 062 903 A1, EP 2 072 743 A2, GB 2 320 048 A1, AT 508 730 A1), das Einbringen vorgefertigter geschäumter Isolationselemente nach dem Ablängen der Profile und vor deren Verschweißen (DE 20 2006 004 515 U1), das Einbringen eines Schaumstoffs nach der Extrusion und vor dem Zuschneiden der Profile (Profilstangen) (WO 02/090703 A2) und schließlich das Ausschäumen der Endlos-Profile während der Extrusion (EP 1 237 697 B1, DE 1 959 464 A1, WO 2011/062632 A1).

Die erste Methode, das Ausschäumen fertiger Blend- oder Flügelrahmen, stellt bei der Herstellung von Fenstern und Türen eine erhebliche Unterbrechung des üblichen Verfahrensablaufs dar. Zudem ist die gleichmäßige und vollständige Füllung einer oder mehrerer Hohlkammern eines fertigen Rahmens äußerst problematisch, zumal üblicherweise die in einer Fertigungsstraße hergestellten Rahmen jeweils unterschiedliche Größen aufweisen.

Die zweite Methode, bei der vorgefertigte Isolationselemente, unmittelbar vor dem Verschweißen der Profile in die bereits abgelängten Profilstücke eingeschoben werden, ist beispielsweise aus der DE 20 2006 004 515 U1 bekannt und hat sich grundsätzlich in der Praxis bewährt. Allerdings wird für jede neue Profilkammer-Geometrie ein entsprechend geformtes Isolations-Dämmelement benötigt, was zu entsprechenden Herstellungs- und Lagerhaltungskosten führt.

Bei der vierten Methode, dem Ausschäumen der Endlos-Profile während der Extrusion, wird durch die üblicherweise exotherme Reaktion der eingebrachten schäumfähigen Isoliermaterialkomponenten die Abkühlung des PVC-Profils stark verzögert, so dass nur sehr geringe Extrusionsgeschwindigkeiten erreichbar sind.

Die vorliegende Erfindung betrifft ein Verfahren nach der dritten Variante, dem Einbringen eines wärmedämmenden Schaumstoffs in lange Hohlkammer-Profilstangen, üblicherweise mit 6 bis 7 m Länge. Hierbei ist charakteristisch, dass das Verhältnis von der Länge der Profile zur lichten Weite der Hohlkammer, in die der Schaumstoff eingebracht wird, sehr groß ist, insbesondere 50:1 bis 250:1. Hierzu sind folgende Verfahren bekannt:
Das Einbringen vorgefertigter langer Isolationselemente durch Einschieben oder, beispielsweise gemäß der WO 02/090703 A2, durch Einsaugen mit Unterdruck in eine der Hohlkammern des Hohlkammerprofils. Bei längeren Profilen benötigt man hierfür somit Anlagen beträchtlicher Länge. Zudem sind Herstellung und Transport von entsprechend langen vorgefertigten Isolationselementen, von denen für jede Hohlkammergeometrie andere Isolationselemente benötigt werden, aufwendig und teuer.

Es ist daher bereits versucht worden, lange Profile mit 6 bis 7 m Länge durch eines der offenen Profilenden mit z. B. einem PU-Schaum auszuschäumen, beispielsweise mittels einer entsprechend langen Injektionslanze. Dieses Verfahren ist jedoch nur für Hohlkammern mit sehr großem Querschnitt einsetzbar, zudem ist ein gleichmäßiges Ausschäumen kaum zu erreichen. Schließlich ist die Handhabung einer so langen Injektionslanze problematisch.

Aus der DE 30 31 229 A1 ist ein weiteres Verfahren zum Ausschäumen von längeren geschlossenen Hohlkammerprofilen mit einem Polyurethanschaum bekannt, bei dem das schäumfähige Polyurethan-Gemisch zunächst auf eine profilierte Materialbahn aus z. B. Papier aufgebracht und diese profilierte Materialbahn in die Hohlkammer eingeführt wird, worauf das Polyurethan-Material anschließend ausschäumt und die Hohlkammer ausfüllt. Der gesamte Prozess ist allerdings sehr diffizil und schwer beherrschbar, zudem muss die Materialbahn im Profil verbleiben und stört ein späteres Recycling.

Aus der DE 35 12 588 A1 ist bekannt, Hohlkammerprofile vor der Verarbeitung zu Rahmen mit einer anorganischen schäumfähigen Masse durch Einpressen von der Stirnseite zu füllen.

### Aufgabe

Aufgabe der vorliegenden Erfindung ist es daher, ein verbessertes Verfahren zum Einbringen eines Isolierschaumstoffs, insbesondere eines wärmedämmenden Schaumstoffs, in lange Profilstangen von z. B. 6 bis 7 m Länge zur Verfügung zu stellen.

### Darstellung der Erfindung

Die Erfindung löst diese Aufgabe durch ein Verfahren nach Anspruch 1, bevorzugt in Verbindung mit einem oder mehreren der Merkmale der Unteransprüche. Mit dem erfindungsgemäßen Verfahren ist es möglich, eine oder mehrere Hohlkammern eines Hohlkammerprofils auszuschäumen, wobei das Verhältnis von der Länge der Profile zur lichten Weite der Hohlkammer, in die der Schaumstoff eingebracht wird, sehr groß sein kann, insbesondere 50:1 bis 250:1, gemessen an der weitesten Stelle der Hohlkammer.

Dabei liegt der Kern der Erfindung darin, die Hohlkammer eines langen Profilstücks nicht von den offenen Seiten oder - was ggf. ebenfalls naheliegen würde - ausschließlich von der Mitte des Profiles aus auszuschäumen, sondern durch eine Mehrzahl von Einfüllöffnungen, die gleichmäßig über die Länge des Hohlkammerprofils verteilt sind. Es ist dabei wesentlich, dass zwischen je zwei Einfüllöffnungen wenigstens eine, bevorzugt mehrere Entlüftungsöffnungen vorgesehen sind, durch die die von der Schäumfront verdrängte Luft entweichen kann. Die Entlüftungsöffnungen sind dabei bevorzugt etwa mittig, d. h. zwischen 45 und 55 % des Abstandes, zwischen je zwei Einfüllöffnungen angebracht, und zwar unabhängig davon, ob das schäumfähige Gemisch gleichzeitig durch die einzelnen Einfüllöffnungen in die Hohlkammer gespritzt wird oder sukzessive. Es hat sich nämlich herausgestellt, dass durch eine entsprechende Dosierung das Ende der Schäumfront so eingestellt werden kann, dass diese ziemlich exakt im Bereich der Mitte zwischen zwei Einfüllöffnungen liegt, so dass unabhängig davon, ob durch diese beiden benachbarten Einfüllöffnungen gleichzeitig oder hintereinander das schäumfähige Gemisch eingefüllt wird, die beiden Schäumfronten immer etwa in der Mitte zwischen den beiden Einfüllöffnungen zusammentrifft und so das Profil auch in diesem Bereich vollständig bei relativ gleichmäßig verteilter Dichte des Schaumstoffs ausgefüllt wird.

Die Größe der Einfüllöffnungen hängt in erster Linie mit der Größe der verwendeten Einspritzdüse zusammen, günstige Werte liegen im Bereich zwischen 5 und 15 mm. Die Entlüftungsöffnungen können wesentlich kleiner gestaltet werden, beispielsweise im Bereich von 1 bis 2,5 mm, wobei mehrere, in Tiefenrichtung und/oder in Richtung der Längserstreckung des Profils betrachtet nebeneinander bzw. hintereinander liegende kleine Entlüftungsbohrungen besonders vorteilhaft sind, um eine vollständige Entlüftung sicher zu stellen.

Die Einfüllöffnungen werden möglichst unmittelbar nach dem Einspritzen des schaumfähigen Gemisches verschlossen. Nach einer ersten Ausführungsform der Erfindung wird hierzu die Einfüllöffnung mit einem einfachen Stopfen lediglich temporär verschlossen, wobei dieser Stopfen nach dem Aushärten des Schaumstoffs wieder entfernt wird. Um einen luft- und diffusions- bzw. permeationsdichten Abschluss der ausgeschäumten Hohlkammer zu erreichen, ist nach einer besonders vorteilhaften Ausführungsform der Erfindung vorgesehen, alle Einfüllöffnungen und bevorzugt auch die Entlüftungsbohrungen dauerhaft, z. B. mit einem entsprechenden Stopfen, zu verschließen. In vorteilhafter Weise werden die Einfüllöffnungen im Profilquerschnitt so angeordnet, dass die Einfüllöffnungen bzw. die diese verschließenden Stopfen im fertigen Flügel- bzw. Blendrahmen nicht mehr sichtbar sind. Beim Blendrahmen liegt die Anordnung somit bevorzugt im Maueranschlussbereich des Blendrahmens, beim Flügelrahmen im Glasfalzbereich.

Die erfindungsgemäß vorgesehenen Einfüllöffnungen werden bevorzugt so über die Länge des Profilstabes verteilt, dass sie untereinander etwa den gleichen Abstand von 0,5 bis 2,5 m, insbesondere zwischen 1 und 2 m haben, wobei bei großen Hohlkammerquerschnitten die Abstände bevorzugt über 1,5 m, bei sehr kleinen Hohlkammerquerschnitten bevorzugt unter 1,5 m liegen. Die erste und die letzte der Einfüllöffnungen haben zum Ende des Profilstabes hin bevorzugt einen Abstand, der dem halben Abstand zwischen zwei Einfüllöffnungen entspricht.

Bei einer üblichen Länge des Hohlkammerprofils von 6,50 m hat sich eine Anzahl von vier über die Länge verteilten Einfüllöffnungen als besonders geeignet herausgestellt, wobei die erste Einfüllöffnung nach ca. 81 cm, die zweite und dritte nach jeweils weiteren 1,62 m etc. und die letzte Einfüllöffnung entsprechend wiederum 81 cm vor dem Ende platziert wird. Die Entlüftungsbohrungen werden in diesem Fall optimal nach ca. 0,5 cm, 1,62 m, 3,25 m, etc. und die letzte Entlüftungsbohrung wieder 0,5 cm vor dem Ende angeordnet. Die Schäumfront von den jeweiligen Einfüllöffnungen hat demgemäß jeweils immer einen Weg von ca. 81 cm zurückzulegen bis zur Mitte zwischen zwei Einfüllöffnungen bzw. bis zum Ende des Profils.

Nach einer besonders bevorzugten Ausführungsform der Erfindung werden vor oder unmittelbar nach dem dosierten Einspritzen des schäumfähigen Gemisches die Enden der Hohlkammer des Hohlkammerprofils verschlossen. Dieses bedingt, dass jeweils unmittelbar im Endbereich der Profile entsprechende Entlüftungsöffnungen vorgesehen sind, um die gezielte Entlüftung der Profilhohlräume beim Ausschäumen zu gewährleisten. Die Enden der Profile können beispielsweise durch eine Verschlusskappe, die die auszuschäumende Hohlkammer abdeckt, durch einen Schieber oder auf ähnliche Weise verschlossen werden.

Erfindungsgemäß wird das Hohlkammerprofil beim Expandieren und Aushärten des schäumfähigen Gemisches etwa waagerecht - d. h. mit einem Winkel von < 5° gegenüber der Waagerechten - gehalten, um eine gleichmäßige Verteilung des eingespritzten schäumfähigen Gemisches zu beiden Seiten der Einspritzstelle zu gewährleisten.

Als schäumfähiges Gemisch wird bevorzugt eine Mischung enthaltend einerseits ein Diol und/oder Polyol und andererseits ein Di- und/oder Poly-Isocyanat verwendet. Als Treibmittel wird bevorzugt das durch die Reaktion von Wasser und dem Di- und/oder Poly-Isocyanat entstehende CO₂ verwendet, es können jedoch auch andere übliche physikalische Treibmittel für Polyurethane, insbesondere Pentan, zugesetzt werden. Die Dichte des bevorzugt eingesetzten geschlossenzelligen Polyurethanschaums beträgt im Mittel nach einer vorteilhaften Ausgestaltung der Erfindung 30 bis 150 kg/m³, besonders bevorzugt 50 bis 100 kg/m³.

Die Dichteverteilung ist bei dem erfindungsgemäßen Verfahren relativ gleichmäßig, kann jedoch in geringem Maße schwanken. Die Einstellung der Dichte erfolgt z. B. gemäß dem Stand der Technik durch Anpassung der eingesetzten Treibmittelmenge, insbesondere des Anteils an Wasser im Polyolanteil der Mischung. Soweit der Abstand zwischen zwei Einfüllöffnungen geringer gewählt wird bzw. bei gegebener Profillänge mehr Einfüllöffnungen vorgesehen werden, kann bei dem Schaumstoff eine geringere Dichte eingestellt werden als bei größerem Abstand zwischen zwei Einfüllöffnungen, da bei längerem Fließweg bis zu den Entlüftungsöffnungen die Dichte des entstehenden Schaumstoffs zunimmt.

Nach einer weiteren besonders bevorzugten Ausführungsform der Erfindung werden mehrere in Tiefenrichtung benachbarte Hohlkammern des Hohlkammerprofils gleichzeitig ausgeschäumt, indem die Einfüllöffnungen von jeweils zwei benachbarten Hohlkammern des Hohlkammerprofils so angebohrt werden, dass die zwischen den beiden Hohlkammern liegende Wandung im Bereich der Einfüllöffnung teilweise entfernt wird und somit beim Einspritzen des schäumfähigen Gemisches ein Teil dieses Gemisches in jede der beiden Hohlkammern eingebracht wird.

Nach einer weiteren besonders bevorzugten Ausführungsform der Erfindung wird vor dem dosierten Einspritzen des schäumfähigen Gemisches ein Zusatzprofil aus thermoplastischem Kunststoff, besonders bevorzugt aus Hart-PVC, in die auszuschäumende Hohlkammer eingeschoben, wobei das Zusatzprofil insbesondere mit dem Ausschäumen der Hohlkammer in der Hohlkammer fixiert wird. Das Zusatzprofil kann vorteilhaft aus Recyclingmaterial hergestellt werden und verbessert einerseits die Biegesteifigkeit des Gesamtprofils in nicht unerheblichem Maße, insbesondere wird aber die Auszugsfestigkeit von Schrauben, die beispielsweise zur Befestigung der Schließbleche, Bänder o. dgl. in die Hohlkammer geschraubt werden, verbessert. Hierzu muss das Zusatzprofil eine entsprechend angepasste Geometrie und Lage innerhalb der Hohlkammer aufweisen. Die Fixierung der Lage innerhalb der Hohlkammer erfolgt nach einer besonders bevorzugten Ausgestaltung derart, dass wenigstens eine Außenwandung des Zusatzprofils an wenigstens einer Innenwandung der Hohlkammer spielfrei anliegt. Das Zusatzprofil kann seinerseits wiederum als Hohlkammerprofil ausgeführt sein oder aus entsprechend geformtem kompaktem Material. Durch die Einbettung in dem gut wärmedämmenden Schaumstoff wird die Wärmedämmung des Gesamtsystems gegenüber einer vollständig ausgeschäumten Kammer nur unwesentlich verschlechtert, gegenüber einer offenen Kammer in der Regel sogar verbessert.

Um aus den erfindungsgemäß hergestellten Hohlkammerprofilen entsprechende Rahmen für ein Fenster oder eine Tür herzustellen, werden die Profile in an sich bekannter Weise auf Gehrung zugeschnitten und im Gehrungsbereich miteinander verschweißt, wobei der die Hohlkammer ausfüllende Schaumstoff, insbesondere Polyurethan, die Eckfestigkeit nur unwesentlich beeinflusst. Bei Bedarf kann im Gehrungsbereich auf eine Tiefe von wenigen mm der Schaumstoff entfernt werden, dieses ist üblicherweise jedoch nicht notwendig.

Soweit zum Aufschäumen des Isolierschaumstoffs ein Treibmittel verwendet wird, das eine geringere Wärmeleitfähigkeit als Luft aufweist, ist es vorteilhaft, wenn sämtliche Einfüllöffnungen und bevorzugt auch alle Entlüftungsöffnungen sowie ggf. bis zur Verarbeitung die Profilenden wenigstens weitgehend diffusions- bzw. permeationsdicht verschlossen werden. Hierdurch wird verhindert, dass die in den einzelnen Zellen des Schaumstoffs enthaltenden Treibgase - also insbesondere CO₂ und/oder Pentan - durch Luft ausgetauscht werden, wodurch die Wärmedämmung abnehmen würde. Soweit Hart-PVC für die erfindungsgemäß eingesetzten Hohlkammerprofile eingesetzt wird, sind diese bei den üblicherweise verwendeten Wanddicken von 2,5 bis 3 mm genügend permeationsdicht, um einen relevanten Austausch von CO₂ bzw. Pentan gegen Luft für einen ausreichend langen Zeitraum sicherzustellen.

Das erfindungsgemäße Verfahren wird bevorzugt zum Ausschäumen von Hohlkammerprofilen mit mehreren Hohlkammern eingesetzt. Es können jedoch grundsätzlich auch Profile mit lediglich einer Kammer, wie z. B. Glasleisten etc., ausgeschäumt werden.

### Kurze Beschreibung der Zeichnung

Die Erfindung wird nachfolgend anhand eines Ausführungsbeispiels sowie der Zeichnung näher erläutert. Es zeigen dabei:
- Fig. 1: ein Querschnitt eines Flügelrahmenprofils im Bereich einer der Einfüllöffnungen;
- Fig. 2: ein Querschnitt des Flügelrahmenprofils nach Fig. 1 nach dem Ausschäumen der Hohlkammer;
- Fig. 3: einen Querschnitt durch ein Blendrahmenprofil im Bereich einer der Einfüllöffnungen;
- Fig. 4: einen Querschnitt durch das Blendrahmenprofil gemäß Fig. 3 nach dem Ausschäumen der Hohlkammern;
- Fig. 5: eine Aufsicht auf das Flügelrahmenprofil und das Blendrahmenprofil mit angedeuteten Einfüllöffnungen und Entlüftungsbohrungen;
- Fig. 6: Detail A gemäß Fig. 5 (Einfüllöffnungen);
- Fig. 7: Detail B gemäß Fig. 5 (Entlüftungsbohrungen);
- Fig. 8: einen Querschnitt durch ein Blendrahmenprofil ähnlich Fig. 4, jedoch mit Zusatzprofil.

### Wege zur Ausführung der Erfindung

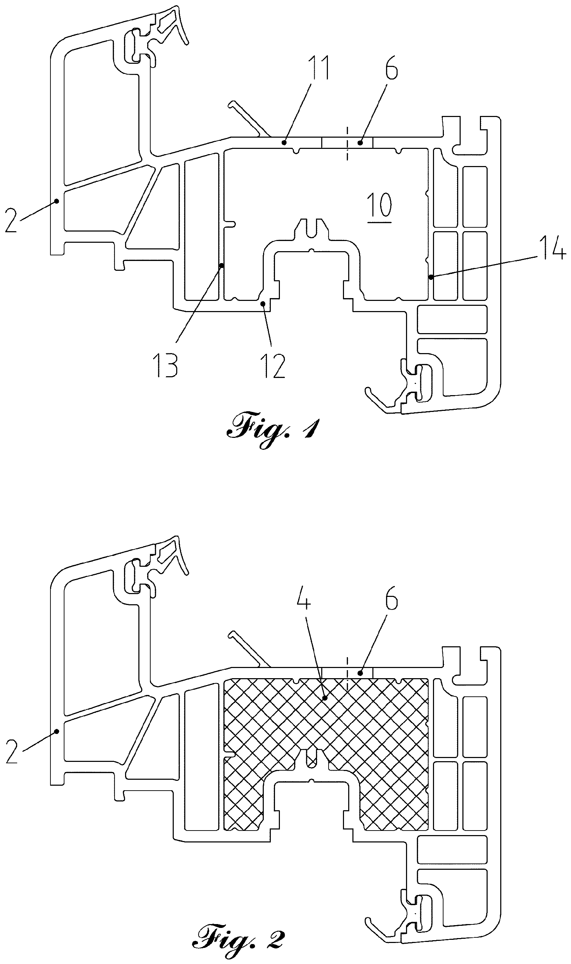

Das in den Fig. 1 und 2 im Querschnitt dargestellte Flügelrahmenprofil 2 ist ein handelsübliches PVC-Hohlkammerprofil mit einer Bautiefe von 88 mm und einer relativ großen, normalerweise zur Aufnahme eines Verstärkungsprofils dienenden Hohlkammer 10. Die Hohlkammer 10 wird begrenzt durch die Wandungen 11, 12, 13 und 14. In Fig. 1 ist ebenfalls eine der Einfüllöffnungen 6 dargestellt.

Das Flügelrahmenprofil 2 wird in dem Fachmann bekannter Weise aus Hart-PVC extrudiert, kalibriert und in Längen von 6,5 m abgelängt. In diese Profilstangen wird nach 812,5 mm eine erste Einfüllöffnung 6 mit einem Durchmesser von 10 mm in die Wandung 11 gebohrt. Die Wandung 11 bildet im fertigen Fenster den Glasfalzbereich, so dass die Einfüllöffnungen 6 im fertigen Fenster nicht sichtbar sind.

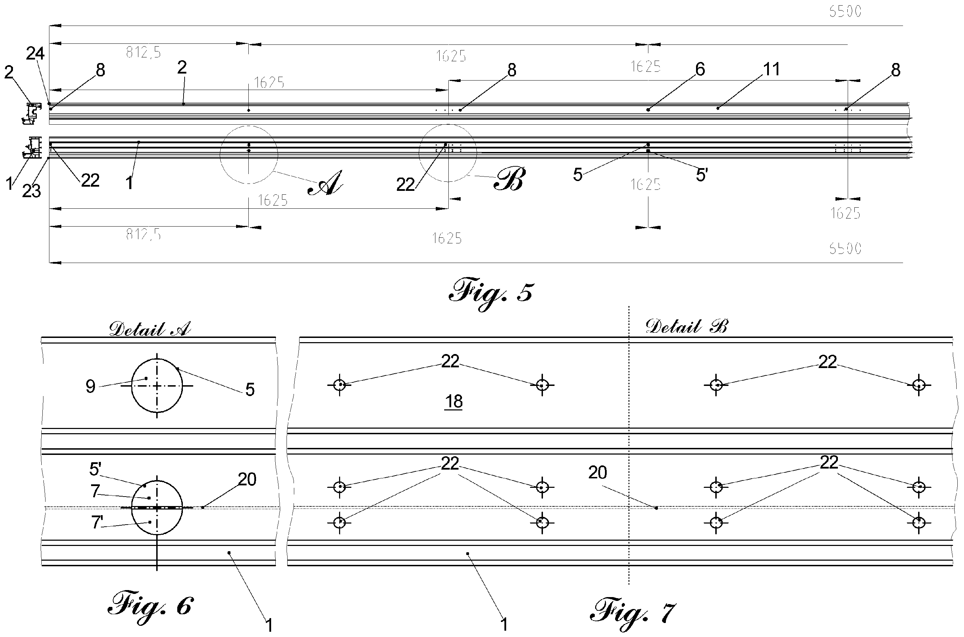

Weitere Einfüllöffnungen folgen nach jeweils 1,625 m, so dass die letzte Einfüllöffnung wieder 812,5 mm vom Ende des Flügelrahmenprofils 2 angeordnet ist. An den beiden Enden des Flügelrahmenprofils 2 wird im Abstand von 5 mm zum Ende eine Bohrung mit einem Durchmesser von 2 mm als Entlüftungsöffnung 8 gebohrt (Fig. 5). Mittig zwischen je zwei Einfüllöffnungen 6 werden in Längsrichtung hintereinander angeordnet jeweils vier Bohrungen mit einem Durchmesser von 2 mm und mit jeweils einem Abstand untereinander von 30 mm als weitere Entlüftungsöffnungen 8 platziert.

Zum Ausschäumen der Hohlkammer 10 werden zunächst die Enden des Flügelrahmenprofils 2 mit pneumatisch betätigten Schiebern verschlossen. Danach wird durch jede der Einfüllöffnungen 6 eine Mischung einer handelsüblichen Polyolabmischung mit einem Wassergehalt von 3,2 Gew.-% und einer Di-/Poly-Isocyanat-Komponente dosiert eingespritzt. Im dargestellten Ausführungsbeispiel erfolgt das Einspritzen des reaktionsfähigen schäumfähigen Gemisches zunächst durch die erste Einfüllöffnung 6 und danach sukzessive durch die weiteren Einfüllöffnungen 6, wobei nach dem Einspritzen durch eine der Einfüllöffnungen 6 diese jeweils durch einen passenden Stopfen verschlossen wird, um das Austreten des PUR-Schaums zu verhindern.

Das Gemisch aus der Polyolabmischung und der Di-/Poly-Isocyanat-Komponente reagiert in einer Polyadditionsreaktion zu Polyurethan. Das der Polyolabmischung zugesetzte Wasser reagiert mit dem Isocyanat unter Abspaltung von CO₂, wobei das CO₂ als Treibmittel dient.

Das Flügelrahmenprofil 2 wird beim Einspritzen, Expandieren und Aushärten des schäumfähigen Gemisches etwa waagerecht gelagert, so dass sich nach dem Einspritzen des reaktionsfähigen schäumfähigen Gemisches die Schäumfront gleichmäßig zu beiden Seiten der jeweiligen Einfüllöffnungen 6 bis zu den jeweiligen Entlüftungsöffnungen 8 ausbreitet, wobei die zwischen den beiden Schäumfronten eingeschlossene Luft nahezu vollständig aus den Entlüftungsöffnungen 8 entweicht. Im dargestellten Ausführungsbeispiel wurde ein Polyurethan-Isolierschaumstoff 4 mit einer mittleren Dichte von 80 kg/m³ gebildet. Nach vollständigem Reagieren des schäumfähigen Gemisches entweicht eine sehr kleine Menge des entstandenen Polyurethan-Isolierschaumstoffs 4 durch die jeweiligen Entlüftungsöffnungen 8, so dass das vollständige Ausschäumen der Hohlkammer 10 des Flügelrahmenprofils 2 entsprechend kontrolliert werden kann. Der ausgetretene ausgehärtete PUR-Schaum wird zweckmäßig entfernt und die Entlüftungsbohrungen 8 z. B. mit einem kleinen Tropfen Schmelzkleber diffusionsdicht verschlossen.

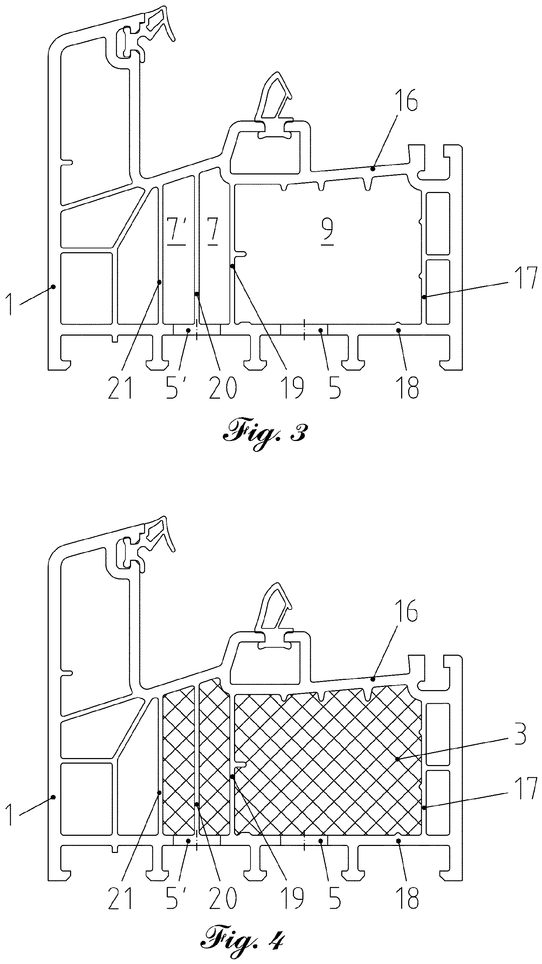

In den Fig. 3 und 4 ist ein handelsübliches, aus PVC extrudiertes Hohlkammerprofil einer Bautiefe von 88 mm als Blendrahmenprofil 1 dargestellt. Das Blendrahmenprofil 1 weist eine relativ große, normalerweise zur Aufnahme eines Verstärkungsprofils dienende Hohlkammer 9 sowie zwei weitere kleinere Hohlkammern 7 und 7' auf, die in dem nachfolgenden Beispiel ausgeschäumt werden sollen. Die Hohlkammer 9 wird begrenzt durch die Wandungen 16, 17, 18 und 19, während zwischen den Hohlkammern 7 und 7' die Wandung 20 und zur Außenseite der Hohlkammer 7' die Wandung 21 liegt. In der Wandung 18, die den Maueranschlussbereich des Blendrahmenprofils 1 bildet, sind die Einfüllöffnungen 5 und 5' zu erkennen. Die Einfüllöffnung 5 befindet sich mittig zwischen zwei Rastfüßen des Maueranschlussbereiches und dient zum Einspritzen des schäumfähigen reaktiven Gemisches in die Hohlkammer 9, während die Einfüllöffnung 5' so mittig im Bereich der Wandung 20 angeordnet ist, dass beim Bohren der Einfüllöffnung 5' zugleich ein Teil der Wandung 20 entfernt wird und damit beide Hohlkammern 7, 7' in gleichem Maße geöffnet sind.

Die Platzierung der einzelnen Einfüllöffnungen 5, 5' sowie der entsprechenden Entlüftungsbohrungen 22 erfolgt analog der Beschreibung zu den Fig. 1 und 2 und ist in der Fig. 5 in einer Aufsicht und in den Fig. 6 und 7 als Darstellung der Details A bzw. B entsprechend der Fig. 5 nochmals näher dargestellt.

In Fig. 5 sind das Flügelrahmenprofil 2 und das Blendrahmenprofil 1 nebeneinander liegend jeweils von der Einspritzseite her in der Ansicht dargestellt, am links dargestellten Endbereich 23 des Blendrahmenprofils 1, das beim Einspritzen des schäumfähigen Reaktionsgemisches durch die Einfüllöffnungen 5 und 5' durch einen nicht dargestellten Schieber verschlossen ist, befindet sich 5 mm vor dem Ende des Blendrahmenprofils 2 eine erste Entlüftungsöffnung 22. Weitere Gruppen von Entlüftungsöffnungen folgen nach 1625 mm, 3250 mm etc. Die Gruppen von Entlüftungsöffnungen 22 zwischen je zwei Einfüllöffnungen 5, 5' sind, wie in Fig. 7 im Detail dargestellt, so angeordnet, dass sie untereinander einen etwa gleichen Abstand von 30 mm in Längserstreckung aufweisen und zusammen etwa mittig zwischen den Einfüllöffnungen zu liegen kommen. Alle Entlüftungsöffnungen 22 weisen einen Durchmesser von ca. 2 mm und alle Einfüllöffnungen 5, 5' einen Durchmesser von 10 mm auf.

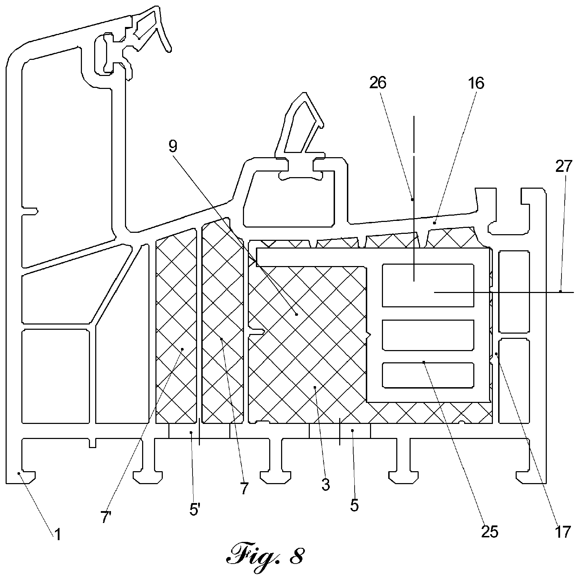

In Fig. 8 ist ein erweitertes Ausführungsbeispiel der Erfindung dargestellt. Ähnlich wie in den Fig. 3 und 4 wird dabei ein Blendrahmenprofil als 6,5 m lange Profilstange ausgeschäumt, wobei zusätzlich vor dem Ausschäumen das Zusatzprofil 25 aus Hart-PVC eingeschoben wurde. Das Zusatzprofil 25 weist dabei selbst wiederum drei Hohlkammern auf, die im vorliegenden Beispiel jedoch nicht mit ausgeschäumt werden. Durch entsprechende Bohrungen bzw. Schlitze in den Wandungen des Zusatzprofils 25 könnten diese jedoch zusätzlich mit ausgeschäumt werden.

Beim Einspritzen des schäumfähigen Reaktionsgemisches durch die Einfüllöffnungen 5 wird die Härtungs- und Schäumreaktion des Gemisches ausgelöst, wobei sich der bildende Polyurethan-Isolierschaumstoff 3 gleichmäßig in den Raum zwischen den Einfüllöffnungen 5 und den Entlüftungsöffnungen 22 des Blendrahmenprofils 1 ausbreitet und dabei zugleich das Zusatzprofil 25 an die Wandungen 16 und 17 des Blendrahmenprofils 1 anpresst, so dass dieses Zusatzprofil 25 fest an den Wandungen 16 und 17 anliegt.

Bei der späteren Fensterfertigung werden Beschlagskomponenten mit den in Fig. 8 nur symbolisch dargestellten Schrauben 26 und 27 am Blendrahmenprofil 1 befestigt, wobei diese Schraubverbindungen 26 und 27 sowohl die Wandungen des Blendrahmenprofils als auch die entsprechenden Wandungen des Zusatzprofils 25 durchdringen, so dass eine außerordentlich hohe Auszugsfestigkeit der Schrauben 26 und 27 erreicht wird. Zugleich dient das Zusatzprofil 25 zur mechanischen Versteifung des Blendrahmenprofils 1, ohne dass die Wärmedämmung zu sehr beeinträchtigt wird, da der Isolierschaumstoff 3 mit seiner außerordentlich guten Wärmedämmung die Wärmeleitung des Zusatzprofils 25 mehr als ausgleicht.

Soweit zum Aufschäumen des Isolierschaumstoffs 3, 4 ein Treibmittel verwendet wird, das eine geringere Wärmeleitfähigkeit als Luft aufweist, ist es vorteilhaft, wenn sämtliche Einfüllöffnungen 5, 5' , 6 und alle Entlüftungsöffnungen 8, 22 sowie ggf. bis zur Verarbeitung die Profilenden wenigstens weitgehend diffusions- bzw. permeationsdicht verschlossen werden. Hierdurch wird verhindert, dass die in den einzelnen Zellen des Polyurethan-Schaumstoffs enthaltenden Treibgase - also insbesondere CO₂ und/oder Pentan - durch Luft ausgetauscht werden, wodurch die Wärmedämmung abnehmen würde. Das Hart-PVC-Material der erfindungsgemäß eingesetzten Hohlkammerprofile ist bei den üblicherweise verwendeten Wanddicken von 2,5 bis 3 mm genügend permeationsdicht, um einen relevanten Austausch von CO₂ bzw. Pentan gegen Luft für einen ausreichend langen Zeitraum sicherzustellen.

### Legende

- 1: Blendrahmenprofil
- 2: Flügelrahmenprofil
- 3: Isolierschaumstoff (Blendrahmenprofil)
- 4: Isolierschaumstoff (Flügelrahmenprofil)
- 5, 5': Einfüllöffnungen (Blendrahmenprofil)
- 6: Einfüllöffnungen (Flügelrahmenprofil)
- 7, 7': Hohlkammern (Blendrahmenprofil)
- 8: Entlüftungsbohrungen (Flügelrahmenprofil)
- 9: Hohlkammer (Blendrahmenprofil)
- 10: Hohlkammer (Flügelrahmenprofil)
- 11: Wandung (Flügelrahmenprofil)
- 12: Wandung (Flügelrahmenprofil)
- 13: Wandung (Flügelrahmenprofil)
- 14: Wandung (Flügelrahmenprofil)
- 15: entfällt
- 16: Wandung (Blendrahmenprofil)
- 17: Wandung (Blendrahmenprofil)
- 18: Wandung (Blendrahmenprofil)
- 19: Wandung (Blendrahmenprofil)
- 20: Wandung (Blendrahmenprofil)
- 21: Wandung (Blendrahmenprofil)
- 22: Entlüftungsöffnungen (Blendrahmenprofil)
- 23: Endbereich (Blendrahmenprofil)
- 24: Endbereich (Flügelrahmenprofil)
- 25: Zusatzprofil
- 26: Schraube
- 27: Schraube

## Patentansprüche

1. Verfahren zum Einbringen eines Isolierschaumstoffs (3, 4) in wenigstens eine von Wandungen (11-21) begrenzte Hohlkammer (7, 7', 9, 10) eines als Hohlkammerprofil (1, 2) ausgebildeten Flügel- oder Blendrahmenprofils zur Herstellung von Fenstern und/oder Türen, umfassend die folgenden Merkmale:
a) Anbringen einer Mehrzahl von über die Länge des Hohlkammerprofils (1,2) verteilten Einfüllöffnungen (5, 5', 6) und von je wenigstens einer Entlüftungsöffnung (8, 22) zwischen je zwei Einfüllöffnungen (5, 5', 6) in wenigstens eine Wandung (11, 18) der wenigstens einen Hohlkammer (7, 7', 9, 10), wobei das Hohlkammerprofil (1, 2) eine Länge von 5,5 bis 7 m aufweist;
b) Dosiertes Einspritzen eines schäumfähigen Gemisches durch die Mehrzahl von Einfüllöffnungen (5, 5', 6) in die wenigstens eine Hohlkammer (7, 7', 9, 10);
c) Verschließen der Einfüllöffnungen (5, 5', 6);
d) Expandieren und Aushärten des schäumfähigen Gemisches unter wenigstens weitgehender Verdrängung des in der wenigstens einen Hohlkammer (7, 7', 9, 10) vorhandenen Gases durch die Entlüftungsöffnungen (8, 22);
wobei das dosierte Einspritzen des schäumfähigen Gemisches gleichzeitig oder sukzessive durch die jeweiligen Einfüllöffnungen (5, 5', 6) erfolgt und wobei das Hohlkammerprofil (1, 2) beim Expandieren und Aushärten des schäumfähigen Gemisches etwa waagerecht - d. h. mit einem Winkel von < 5° gegenüber der Waagerechten - gelagert wird.

2. Verfahren nach Anspruch 1, **dadurch gekennzeichnet, dass** wenigstens drei Einfüllöffnungen (5, 5', 6) über die Länge des Hohlkammerprofils (1, 2) angebracht werden.

3. Verfahren nach Anspruch 1 oder 2, **dadurch gekennzeichnet, dass** vor oder unmittelbar nach dem dosierten Einspritzen des schäumfähigen Gemisches die Enden der wenigstens einen Hohlkammer (7, 7', 9, 10) des Hohlkammerprofils (1, 2) verschlossen werden und dass zusätzlich jeweils wenigstens eine Entlüftungsöffnung (8, 22) unmittelbar in den beiden Endbereichen (23, 24) der Hohlkammer (7, 7', 9, 10) angebracht ist.

4. Verfahren nach einem der Ansprüche 1 bis 3, **dadurch gekennzeichnet, dass** Entlüftungsöffnungen (8, 22) etwa mittig, d. h. zwischen 45 und 55 % des Abstandes, zwischen je zwei Einfüllöffnungen (5, 5', 6) angeordnet sind.

5. Verfahren nach Anspruch 4, **dadurch gekennzeichnet, dass** der Durchmesser der Entlüftungsöffnungen (8, 22) weniger als 50 % des Durchmessers der Einfüllöffnungen (5, 5' ,6) beträgt.

6. Verfahren nach einem der Ansprüche 1 bis 5, **dadurch gekennzeichnet, dass** das als schäumfähiges Gemisch eine Mischung enthaltend ein Diol und/oder Polyol und ein Di- und/oder Poly-Isocyanat verwendet wird.

7. Verfahren nach Anspruch 6, **dadurch gekennzeichnet, dass** die Aufschäumung durch CO₂ und/oder einem physikalischen Treibmittel, insbesondere Pentan, erfolgt.

8. Verfahren nach Anspruch 7, **dadurch gekennzeichnet, dass** das schäumfähige Gemisch zu einem geschlossenzelligen Polyurethan-Schaumstoff einer Dichte von 30 bis 150 kg/m³ aushärtet.

9. Verfahren nach einem der Ansprüche 1 bis 8, **dadurch gekennzeichnet, dass** die Einfüllöffnungen (5') jeweils zwei benachbarte Hohlkammern (7, 7') des Hohlkammerprofils (1) penetrieren, so dass beim dosierten Einspritzen des schäumfähigen Gemisches jeweils ein Teil des Gemisches in jede der beiden benachbarten Hohlkammern (7, 7') eingebracht wird.

10. Verfahren nach einem der Ansprüche 1 bis 9, **dadurch gekennzeichnet, dass** vor dem dosierten Einspritzen des schäumfähigen Gemisches ein Zusatzprofil (25) aus thermoplastischem Kunststoff, insbesondere aus Hart-PVC, in die auszuschäumende Hohlkammer (9) eingeschoben wird und dass dieses Zusatzprofil (25) mit dem Ausschäumen der Hohlkammer (9) in der Hohlkammer (9) fixiert wird.

11. Verfahren nach Anspruch 10, **dadurch gekennzeichnet, dass** die Fixierung des Zusatzprofils (25) derart erfolgt, dass das Zusatzprofil (25) wenigstens an einer der Wandungen (17) der Hohlkammer (9) anliegt.

12. Verfahren nach einem der Ansprüche 1 bis 11, **dadurch gekennzeichnet, dass** die Einfüllöffnungen (5, 5', 6) und ggf. die Entlüftungsöffnungen (8, 22) dauerhaft gasdicht verschlossen werden.

13. Verfahren zur Herstellung eines Blend- oder Flügelrahmens eines Fensters oder einer Tür unter Verwendung eines Hohlkammerprofils (1, 2), bei dem mit dem Verfahren nach einem der Ansprüche 1 bis 12 wenigstens eine der Hohlkammern (7, 7', 9, 10) ausgeschäumt wurde, durch Ablängen des Hohlkammerprofils (1, 2) und Verschweißen der abgelängten Profile im Gehrungsbereich zu den Blend- bzw. Flügelrahmen.

## Claims

1. Method for introducing an insulating foam (3, 4) into at least one hollow chamber (7, 7', 9, 10), delimited by walls (11-21), of a profile of frame of a sash, casement or leaf for producing windows and/or doors formed as a hollow chamber profile (1, 2), comprising the following features:
a) providing a plurality of filling openings (5, 5' 6), distributed over the length of the hollow chamber profile (1, 2), and a respective venting opening (8, 22) between every two filling openings (5, 5', 6) in at least one wall (11, 18) of the at least one hollow chamber (7, 7', 9, 10), the hollow chamber profile (1, 2) having a length of 5.5 to 7 m;
b) injecting a foamable mixture in a metered manner into the at least one hollow chamber (7, 7', 9, 10) through the plurality of filling openings (5, 5', 6);
c) closing the filling openings (5, 5', 6);
d) expanding and curing the foamable mixture while at least largely displacing the gas present in the at least one hollow chamber (7, 7', 9, 10) through the venting openings (8, 22);
the metered injection of the foamable mixture taking place simultaneously or successively through the respective filling openings (5, 5', 6) and the hollow chamber profile (1, 2) being stored more or less horizontally - i.e. with an angle of < 5° with respect to the horizontal - during the expanding and curing of the foamable mixture.

2. Method according to Claim 1, **characterized in that** at least three filling openings (5, 5', 6) are provided over the length of the hollow chamber profile (1, 2).

3. Method according to Claim 1 or 2, **characterized in that**, before or directly after the metered injection of the foamable mixture, the ends of the at least one hollow chamber (7, 7', 9, 10) of the hollow chamber profile (1, 2) are closed and **in that** in addition at least one venting opening (8, 22) is provided directly in each of the two end regions (23, 24) of the hollow chamber (7, 7', 9, 10) .

4. Method according to one of Claims 1 to 3, **characterized in that** venting openings (8, 22) are arranged more or less midway, i.e. between 45 and 55% of the distance, between every two filling openings (5, 5', 6).

5. Method according to Claim 4, **characterized in that** the diameter of the venting openings (8, 22) is less than 50% of the diameter of the filling openings (5, 5', 6).

6. Method according to one of Claims 1 to 5, **characterized in that** a mixture containing a diol and/or polyol and a diisocyanate and/or polyisocyanate is used as the foamable mixture.

7. Method according to Claim 6, **characterized in that** the foaming takes place by CO₂ and/or a physical expanding agent, in particular pentane.

8. Method according to Claim 7, **characterized in that** the foamable mixture is cured to form a closed-cell polyurethane foam of a density of 30 to 150 kg/m³.

9. Method according to one of Claims 1 to 8, **characterized in that** the filling openings (5') in each case penetrate two adjacent hollow chambers (7, 7') of the hollow chamber profile (1), so that, during the metered injection of the foamable mixture, in each case part of the mixture is introduced into each of the two adjacent hollow chambers (7, 7').

10. Method according to one of Claims 1 to 9, **characterized in that**, before the metered injection of the foamable mixture, an additional profile (25) of thermoplastic material, in particular of rigid PVC, is pushed into the hollow chamber (9) to be filled with foam and **in that** this additional profile (25) is fixed in the hollow chamber (9) by the foam filling of the hollow chamber (9).

11. Method according to Claim 10, **characterized in that** the fixing of the additional profile (25) is performed in such a way that the additional profile (25) lies at least against one of the walls (17) of the hollow chamber (9).

12. Method according to one of Claims 1 to 11, **characterized in that** the filling openings (5, 5', 6) and possibly the venting openings (8, 22) are permanently closed in a gas-tight manner.

13. Method for producing a frame of sash or casement of a window or a leaf of a door using a hollow chamber profile (1, 2), in which at least one of the hollow chambers (7, 7', 9, 10) was filled with foam by the method according to one of Claims 1 to 12, by cutting to length the hollow chamber profile (1, 2) and welding the cut-to-length profiles in the region of the mitre joint to form the sash, casement or leaf frames.

## Revendications

1. Procédé d'introduction d'une mousse isolante (3, 4) dans au moins une chambre creuse (7, 7', 9, 10) délimitée par des parois (11 à 21) d'un profilé de châssis battant ou dormant configuré sous la forme d'un profilé à chambre creuse (1, 2) pour la fabrication de fenêtres et/ou de portes, comprenant les caractéristiques suivantes :
a) la disposition d'une pluralité d'ouvertures de remplissage (5, 5', 6) réparties sur la longueur du profilé à chambre creuse (1, 2) et d'au moins une ouverture de dégazage (8, 22) respective entre deux ouvertures de remplissage (5, 5', 6) dans au moins une paroi (11, 18) de ladite au moins une chambre creuse (7, 7', 9, 10), le profilé à chambre creuse (1, 2) présentant une longueur de 5,5 à 7 m ;
b) l'injection dosée d'un mélange moussant au travers de la pluralité d'ouvertures de remplissage (5, 5', 6) dans ladite au moins une chambre creuse (7, 7', 9, 10) ;
c) la fermeture des ouvertures de remplissage (5, 5', 6) ;
d) l'expansion et le durcissement du mélange moussant avec refoulement au moins en majeure partie du gaz présent dans ladite au moins une chambre creuse (7, 7', 9, 10) au travers des ouvertures de dégazage (8, 22) ; l'injection dosée du mélange moussant ayant lieu simultanément ou successivement au travers des ouvertures de remplissage respectives (5, 5', 6) et le profilé à chambre creuse (1, 2) étant conservé approximativement à l'horizontale, c.-à-d. avec un angle de < 5° par rapport à l'horizontale, lors de l'expansion et du durcissement du mélange moussant.

2. Procédé selon la revendication 1, **caractérisé en ce qu'**au moins trois ouvertures de remplissage (5, 5', 6) sont disposées sur la longueur du profilé à chambre creuse (1, 2).

3. Procédé selon la revendication 1 ou 2, **caractérisé en ce qu'**avant ou directement après l'injection dosée du mélange moussant, les extrémités de ladite au moins une chambre creuse (7, 7', 9, 10) du profilé à chambre creuse (1, 2) sont fermées et **en ce qu'**en outre respectivement au moins une ouverture de dégazage (8, 22) est disposée directement dans les deux zones d'extrémité (23, 24) de la chambre creuse (7, 7', 9, 10) .

4. Procédé selon l'une quelconque des revendications 1 à 3, **caractérisé en ce que** des ouvertures de dégazage (8, 22) sont agencées approximativement au milieu, c.-à-d. entre 45 et 55 % de l'écart, entre deux ouvertures de remplissage respectives (5, 5', 6).

5. Procédé selon la revendication 4, **caractérisé en ce que** le diamètre des ouvertures de dégazage (8, 22) est inférieur à 50 % du diamètre des ouvertures de remplissage (5, 5', 6).

6. Procédé selon l'une quelconque des revendications 1 à 5, **caractérisé en ce qu'**un mélange contenant un diol et/ou un polyol et un di- et/ou polyisocyanate est utilisé en tant que mélange moussant.

7. Procédé selon la revendication 6, **caractérisé en ce que** le moussage a lieu par du CO₂ et/ou un agent gonflant physique, notamment du pentane.

8. Procédé selon la revendication 7, **caractérisé en ce que** le mélange moussant est durci en une mousse de polyuréthane à cellules fermées d'une densité de 30 à 150 kg/m³.

9. Procédé selon l'une quelconque des revendications 1 à 8, **caractérisé en ce que** les ouvertures de remplissage (5') pénètrent respectivement dans deux chambres creuses voisines (7, 7') du profilé à chambre creuse (1), de telle sorte que lors de l'injection dosée du mélange moussant, une partie du mélange soit introduite respectivement dans chacune des deux chambres creuses voisines (7, 7').

10. Procédé selon l'une quelconque des revendications 1 à 9, **caractérisé en ce qu'**avant l'injection dosée du mélange moussant, un profilé supplémentaire (25) en matière plastique thermoplastique, notamment en PVC dur, est inséré dans la chambre creuse (9) à remplir de mousse, et **en ce que** ce profilé supplémentaire (25) est fixé dans la chambre creuse (9) lors du remplissage de la chambre creuse (9) avec de la mousse.

11. Procédé selon la revendication 10, **caractérisé en ce que** la fixation du profilé supplémentaire (25) a lieu de telle sorte que le profilé supplémentaire (25) soit accolé à au moins une des parois (17) de la chambre creuse (9).

12. Procédé selon l'une quelconque des revendications 1 à 11, **caractérisé en ce que** les ouvertures de remplissage (5, 5', 6) et éventuellement les ouvertures de dégazage (8, 22) sont fermées de manière durablement étanche aux gaz.

13. Procédé de fabrication d'un châssis dormant ou battant d'une fenêtre ou d'une porte utilisant un profilé à chambre creuse (1, 2), selon lequel au moins une des chambres creuses (7, 7', 9, 10) a été remplie de mousse avec le procédé selon l'une quelconque des revendications 1 à 12, par sectionnement du profilé à chambre creuse (1, 2) et soudage des profilés sectionnés dans la zone d'onglet pour former le châssis dormant ou battant.
